# EUROPEAN PATENT SPECIFICATION

(11) **EP 1 650 535 B1**
(45) Date of publication and mention of the grant of the patent: **07.07.2010**
(21) Application number: 05023183.6
(22) Date of filing: 24.10.2005
(51) Int. Cl.: G01D 5/353, G01D 5/26, G01P 15/093, G01P 21/00

(54) **Collision detection sensor and method**
Sensor und Verfahren zur Kollisionsdetektion
Capteur et procédé de détection de collision

(30) Priority: 25.10.2004 JP 2004310066
(43) Date of publication of application: 26.04.2006
(73) Proprietor: DENSO CORPORATION, Kariya-city, Aichi-pref., 448-8661 (JP)
(72) Inventor: Ohtaka, Koji DENSO CORPORATION IP Dept., Kariya-city Aichi-pref., 448-8661 (JP); Iyoda, Motomi TOYOTA JIDOSHA K. K., Toyota-shi, Aichi-ken 471-8571 (JP); Miyata, Yujiro TOYOTA JIDOSHA K. K., Toyota-shi, Aichi-ken 471-8571 (JP); Kachu, Ryotaro TOYOTA JIDOSHA K. K., Toyota-shi, Aichi-ken 471-8571 (JP); Takahashi, Hiroyuki TOYOTA JIDOSHA K. K., Toyota-shi, Aichi-ken 471-8571 (JP)
(74) Representative: Kuhnen & Wacker

(56) References cited:
- EP-A1- 1 466 790
- WO-A-95/05608
- WO-A-2004/089699
- DE-A1- 19 537 383
- US-A- 4 270 050
- US-A- 5 345 167

## Description

The present invention relates to a collision detection sensor and method to detect a collision with an obstacle such as a pedestrian.

A fiber-optic collision detection sensor, which may be for a pedestrian collision detection, has a problem that accuracy of detecting a load decreases due to age deterioration (deterioration caused over time) and temperature variation of parts. Specifically, the collision detection sensor includes a LED (Light Emitting Diode), a fiber optics, and a PD (Photo Diode). The LED, the fiber optics, and the PD are coupled together.

When a coupling condition between the LED and the fiber optics, or between the fiber optics and the PD becomes poor due to the age deterioration, a loss of the amount of light increases accordingly. As a result, the load detection accuracy decreases. Likewise, when light intensity of the LED becomes poor due to the age deterioration, the load detection accuracy decreases. Further, when light-guiding capability of the fiber optics becomes poor due to the age deterioration, the load detection accuracy decreases. Furthermore, when an ambient temperature of the LED varies, deviation of the peak wavelength of the LED varies. As a result, the load detection accuracy decreases.

A fiber-optic sensor having a temperature-sensing section is disclosed in JP-A-5-126867. The temperature-sensing section is capable of detecting the ambient temperature of the LED. An electric current energizing the LED is adjusted in accordance with the temperature detected by the temperature-sensing section. Therefore, a decrease in detection accuracy due to temperature variation can be prevented.

EP 1 466 790 A1 discloses a fiber-optic collision detection sensor wherein the electric current energizing the LED is adjusted to remove a variation due to environmental influences, age deterioration or temperature changes.

However, the fiber-optic sensor disclosed in the patent document has a complex circuit configuration as a result of having the temperature-sensing section. Further, even if the fiber-optic sensor is diverted to a pedestrian collision detection sensor, it is impossible to prevent the decrease in the load detection accuracy due to the age deterioration.

In view of the above-described problem, it is an object of the present invention to provide a collision detection sensor and method in which decrease in load detection accuracy due to age deterioration and temperature variation of parts can be prevented.

In a collision detection sensor and method, a frequency component lower than a frequency of the collision signal is extracted from an electrical signal of the output of a light-receiving section. The energizing current flowing through a light-emitting section is adjusted based on the component to maintain a constant light emission.

The collision detection sensor and method can extract a variation component due to, for example, age deterioration and temperature variation of the parts from the electrical signal of the output of the light-receiving section. The collision detection sensor and method can adjust the energizing current using the variation component. Therefore, the decrease in the load detection accuracy can be prevented.

The above and other objects, features and advantages of the present invention will become more apparent from the following detailed description made with reference to the accompanying drawings. In the drawings:
FIG. 1 is a transparent overhead view showing a vehicle on which a pedestrian collision detection sensor according to an embodiment of the present invention is mounted;
FIG. 2 is an exploded view showing a front bumper on which the pedestrian collision detection sensor is mounted; and
FIG. 3 is a circuit diagram of the pedestrian collision detection sensor.

A collision detection sensor, which may be used as a pedestrian collision detection sensor, according to an embodiment of the present invention is described below.

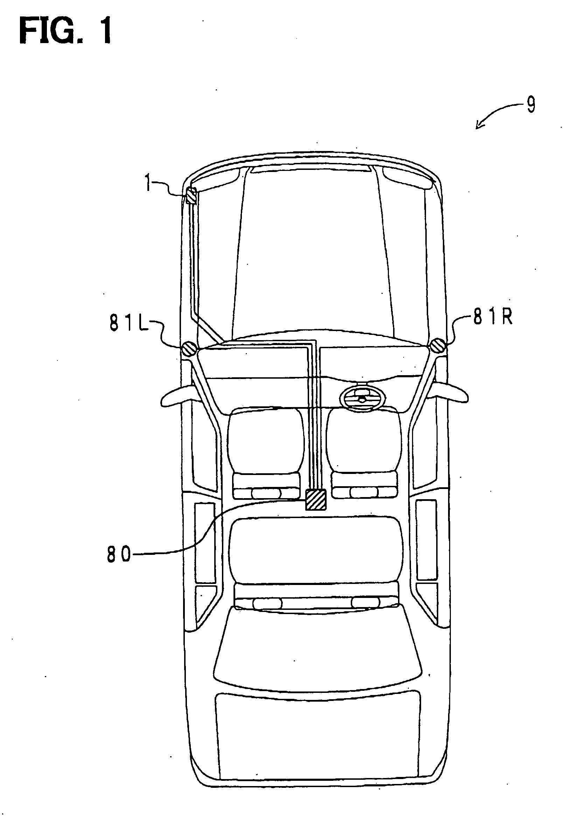

First, arrangement placement of the pedestrian collision detection sensor according to this embodiment is described. FIG. 1 shows an overhead transparent view of a vehicle on which the pedestrian collision detection sensor according to this embodiment is mounted. As shown in FIG. 1, a vehicle 9 includes the pedestrian collision detection sensor 1, an airbag ECU (electronic control unit) 80, and pedestrian protection airbags 81R, 81L.

The pedestrian collision detection sensor 1 is mounted near the front edge of the vehicle. The placement and configuration of the pedestrian collision detection sensor 1 are described in detail later. The airbag ECU 80 is placed under the interior of the vehicle and in the center of the vehicle. The pedestrian collision detection sensor 1 and the airbag ECU 80 are connected through a wiring harness. The pedestrian protection airbag 81 R is placed in the base of the right (hereinafter defined along a direction of travel of the vehicle) A-pillar. The pedestrian protection airbag 81 L is buried in the base of the left A-pillar. The airbag ECU 80 is connected to the pedestrian protection airbag 81R, 81L through the wiring harnesses, respectively,

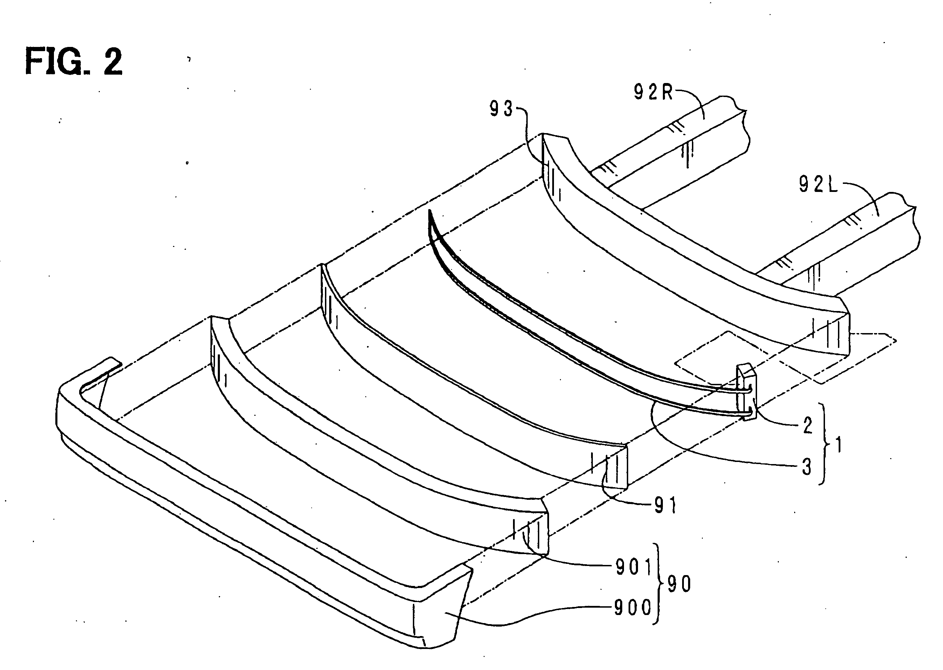

Next, the placement and configuration of the pedestrian collision detection sensor according to this embodiment are described in detail. FIG. 2 is an exploded view of a front bumper in which the pedestrian collision detection sensor according to this embodiment is mounted. As shown in FIG. 2, a front bumper 90 includes a bumper cover 900 and a bumper absorber 901. The bumper cover 900 is made of resin and formed into a plate bent backward at both ends. The bumper cover 900 is exposed to the outside of the vehicle. The bumper absorber 901 is made of resin foam and formed into a plate extending from side to side. The bumper absorber 901 is placed in the rear of the bumper cover 900. In the rear of the bumper absorber 901, a load transmitting plate 91 made of resin and formed into a plate extending from side to side is placed. A bumper reinforcement 93 is attached to the front ends of front side members 92R, 92L. The bumper reinforcement 93 is made of metal and formed of a plate extending from side to side.

The pedestrian collision detection sensor 1 includes a sensor ECU 2 and a fiber optics 3. The fiber optics 3 is made of resin having a light guiding capability and formed into a string. The fiber optics 3 is interposed between the front surface of the bumper reinforcement 93 and the back surface of the load transmitting plate 91. The fiber optics 3 is installed from side to side of the bumper reinforcement 93. The sensor ECU 2 is connected to both ends of the fiber optics 3. The sensor ECU 2 is mounted on the left side surface of the bumper reinforcement 93. The sensor ECU 2 and the airbag ECU 80 are connected through the wiring harness.

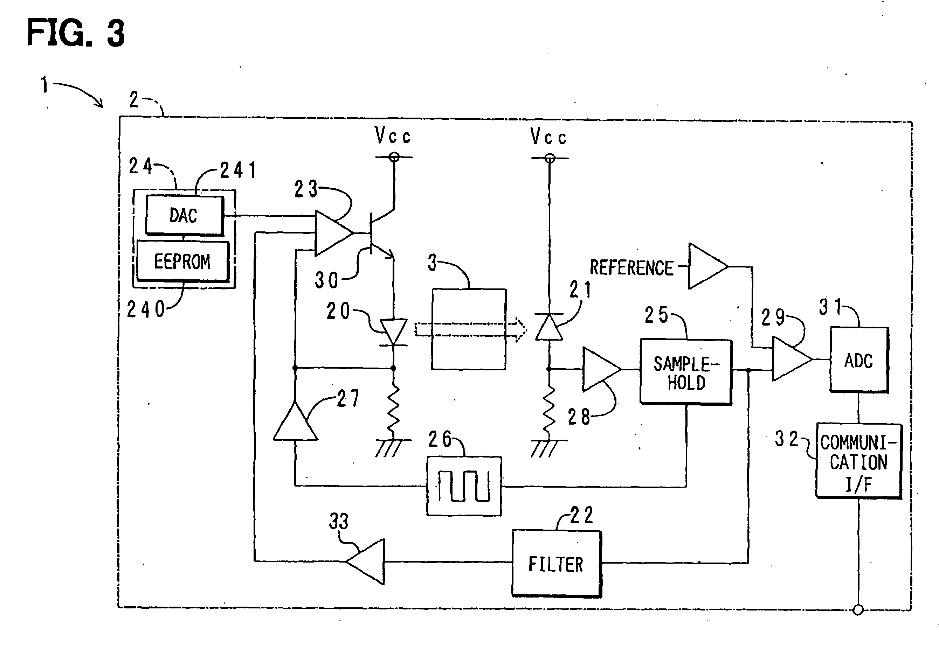

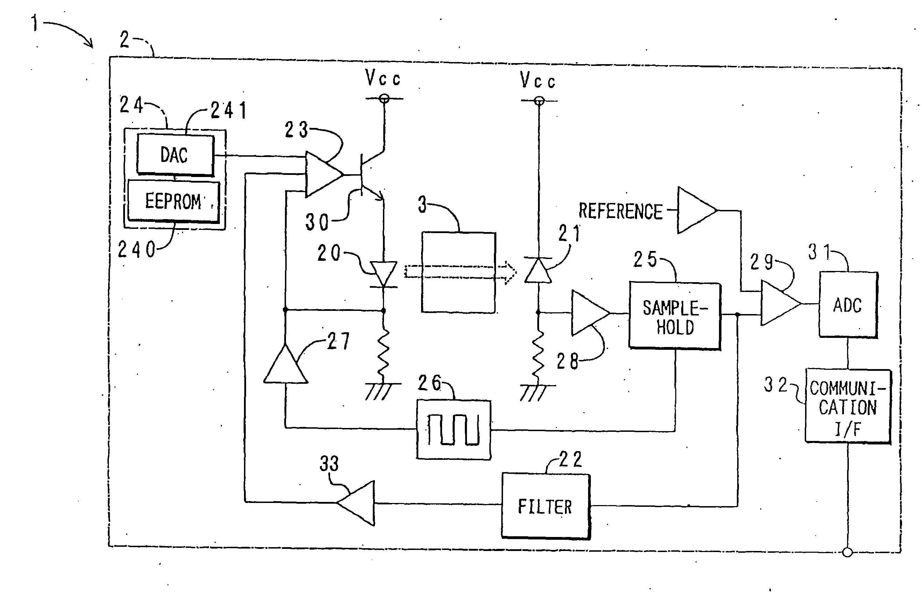

FIG. 3 shows a circuit diagram of the pedestrian collision detection sensor according to this embodiment. As described above, the pedestrian collision detection sensor 1 includes the sensor ECU 2 and the fiber optics 3. As shown in FIG. 3, the sensor ECU 2 includes a LED 20, a PD 21, a filter 22, an energizing current adjustment section 23, an initial zero-point setting section 24, a sample-hold section 25, a transmitter 26, a pulse drive section 27, an I / V (current / voltage) converting section 28, an amplifying section 29, a switching element 30, a ADC (analog-digital converter) 31, and a communication I / F (Interface) 32. The LED 20 is incorporated in the light-emitting section of the present invention. The PD 21 is incorporated in the light-receiving section of the present invention.

The LED 20 is connected to one end of the fiber optics 3. Power source voltage Vcc is applied to an anode of the LED 20 through the switching element 30. The switching element 30 is an npn transistor. The base of the switching element 30 is connected to the energizing current adjustment section 23. ON/OFF control of the energizing current of the LED 20 is performed by the energizing current adjustment section 23. The LED 20 flashes by means of the ON/OFF control.

The energizing current adjustment section 23 is connected to the initial zero-point setting section 24. The initial zero-point setting section 24 includes an EEPROM 240 and a DAC (digital to analog converter) 241. The EEPROM 240 stores an initial adjustment value that adjusts an initial variation appearing just after an installation of the LED 20, the fiber optics 3 and the PD 21. The EEPROM 240 is electrically rewritable.

The energizing current adjustment section 23 is further connected to the filter 22 through a buffer 33. The filter 22 is a low-pass filter having a cutoff frequency fc of 100 Hz, The filter 22 extracts a frequency component lower than the cutoff frequency fc from a continuous signal of an output of the sample-hold section 25 described later.

The energizing current adjustment section 23 is furthermore connected to the transmitter 26 through the pulse drive section 27. The transmitter 26 produces a pulse signal which performs the on / off control of the energizing current. The pulse signal is also provided to the sample-hold section 25. Therefore, the energizing current is in synchronization with the sample-hold section 25.

The PD 21 is connected to the other end of the fiber optics 3. The power source voltage Vcc is applied to a cathode of the PD 21. The anode of the PD 21 is connected to the I / V converting section 28. The I / V converting section 28 converts a detection current of the PD 21 to a voltage. The output of the I / V converting section 28 is connected to the sample-hold section 25. The sample-hold section 25 complements the voltage created at regular time intervals with another signal, when the LED 20 is OFF. Therefore, the sample-hold section 25 outputs the continuous signal. The output of the sample-hold section 25 is connected to the amplifying section 29. The amplifying section 29 amplifies the continuous signal at a predetermined amplification degree. The output of the amplifying section 29 is connected to the ADC 31 and the communication I / F32, Digital data is transmitted to the airbag ECU 80 through the communication I / F32.

An operation of the pedestrian collision detection sensor according to this embodiment, with respect to the case of collision, is described next. When the vehicle 9 collides with a collision object, i.e., when the bumper cover 900 of the front bumper 90 collides with a collision object, an impact of the collision is transmitted to the fiber optics 3 through the bumper cover 900, the bumper absorber 901, and the load transmitting plate 91. The load transmitting plate 91 has relatively high stiffness. Likewise, the bumper reinforcement 93 has relatively high stiffness. Therefore, the fiber optics 3 is crashed between the load transmitting plate 91 and the bumper reinforcement 93. In other words, the fiber optics 91 is deformed into a flat shape having a narrow width back and forth. The amount of the light transmitted from the LED 20 to the PD 21 through the fiber optics 3 changes as a result of the deformation of the fiber optics 3. Therefore, a current flowing through the PD 21 changes. The current is provided from the anode of the PD 21 to the I / V converting section 28. The current is converted to a voltage in the I / V converting section 28. The sample-hold section 25 complements the voltage with an electrical signal, thereby producing the continuous signal, The continuous signal is amplified in the amplifying section 29 and converted to digital data in the ADC 32. The digital data is transmitted to the airbag ECU 80 through the communication I / F 32.

The airbag ECU 80 compares the digital data with a prestored threshold data. The airbag ECU 80 determines whether the collision object is a pedestrian or not based on the comparison. When it is determined that the collision object is a pedestrian, the airbag ECU 80 immediately inflates the pedestrian protection airbags 81R, 81L outside of the vehicle.

An operation at the time of adjusting the energizing current of the pedestrian collision detection sensor according to this embodiment is described next. First, an adjustment (hereinafter called "the first adjustment") for initial characteristic variations appearing just after installation is described. The LED 20, the PD 21, and the fiber optics 3 have large initial characteristic variations. The sum of the variations is fully reflected in the detection current of the PD 21. Therefore, the sum of the variations is fully reflected in the output voltage of the I / V converting section 28 and the continuous signal outputted from the sample-hold section 25.

The continuous signal is transmitted to an adjusting unit, which is not shown. The adjusting unit has a prestored signal (hereinafter called "a reference signal") having no error caused by the initial characteristic variations of the LED 20, the PD21, and the fiber optics 3. The adjusting unit calculates a difference between the continuous signal and the prestored reference signal. Then, the adjusting unit calculates the initial adjustment value based on the difference. The initial adjustment value is written into the EEPROM 240 of the initial zero-point setting section 24.

The initial adjustment value in the EEPROM 240 is transmitted to the energizing current adjustment section 23 through the DAC 241. The energizing current adjustment section 23 adjusts the energizing current of the LED 20 using the initial adjustment value. Specifically, pulse amplitude of the energizing current is adjusted. By adjusting the energizing current based on the initial adjustment value, the initial characteristic variations of the LED 20, the PD21, and the fiber optics 3 can be removed from the detection current of the PD 21.

Second, another adjustment (hereinafter called "the second adjustment") followed by the first adjustment is described, Output variations due to, for example, a change in ambient temperature of the LED 20 and the age deterioration of the parts are all reflected in the continuous signal outputted from the sample-hold section 25. Besides, a time period during which the continuous signal varies due to, for example, the temperature change and the age deterioration is longer than a time period during which the continuous signal varies due to collision. Therefore, the filter 22 removes a frequency component higher than the cutoff frequency fc of 100 Hz from the continuous signal. The filter 22 removes the variation component of the continuous signal due to collision from the continuous signal.

The energizing current adjustment section 23 adjusts the energizing current of the LED 20 using the component extracted by the filter 22. Specifically, pulse amplitude of the energizing current is adjusted. By adjusting the energizing current based on the extracted component, the variation due to the change in ambient temperature of the LED 20, the age deterioration of the parts, or the like can be removed from the detection current of the PD 21.

Advantages of the pedestrian collision detection sensor according to this embodiment are described next. In the pedestrian collision detection sensor 1 according to this embodiment, the variation component due to the age deterioration of the parts, the change in ambient temperature of the LED 20, or the like can be extracted by means of the second adjustment. The energizing current can be adjusted using the variation component so that the amount of light emitted by the LED 20 can be held constant. Therefore, the decrease in the load detection accuracy can be prevented.

Further, the pedestrian collision detection sensor 1 according to this embodiment can comprehensively correct the variation component that varies for a time longer than a predetermined time constant. Therefore, it is not required to incorporate a temperature detection section, or the like. As a result, the circuit configuration is simplified. Further, compared with the case that, for example, a circuit preventing the decrease in the load detection accuracy due to the age deterioration and a circuit preventing the decrease in the load detection accuracy due to the temperature variation are independently incorporated, the circuit configuration is simplified.

In the pedestrian collision detection sensor 1 according to this embodiment, the energizing current can be adjusted based on the initial adjustment value by means of the first adjustment so that the amount of light emitted by the LED 20 can be held constant. Therefore, the decrease in the load detection accuracy, caused by the initial characteristic variations of the LED 20, the PD21, and the fiber optics 3, can be prevented.

In the pedestrian collision detection sensor 1 according to this embodiment, it is not required that the initial characteristic variations of the LED 20, the PD21, and the fiber optics 3, are individually checked. Further, it is not required that the initial characteristic variations of the LED 20, the PD21, and the fiber optics 3, are individually adjusted. Therefore, the initial characteristic variations can be easily adjusted. Also, the circuit configuration is simplified.

In the pedestrian collision detection sensor 1 according to this embodiment, the LED 20 flashes in response to the pulse control of the current. Therefore, proportion of lighting emitting time of the LED 20 to total operating time of the pedestrian collision detection sensor 1 can be reduced. Therefore, the decrease in load detection accuracy, due to the age deterioration of the light intensity of the LED 20, can be prevented.

In the pedestrian collision detection sensor 1 according to this embodiment, the LED 20 flashes so that an increase in temperature of the LED 20 can be prevented. On this point, the decrease in the load detection accuracy, due to the age deterioration of the light intensity of the LED 20, can be prevented. Further, power consumption of the pedestrian collision detection sensor 1 can be reduced as a result of reduction in the power consumption of the LED 20, because the LED 20 flashes.

In the pedestrian collision detection sensor 1 according to this embodiment, the energizing current adjustment section 23 adjusts the pulse amplitude of the energizing current. Therefore, the first adjustment and the second adjustment can be performed without changing the pulse length of the energizing current. Further, the pedestrian collision detection sensor 1 according to this embodiment includes the sample-hold section 25. Therefore, the decrease in the load detection accuracy, due to the flashing of the LED 20, can be prevented.

Up to this point, the pedestrian collision detection sensor according to the embodiment of the present invention has described. However, the present invention is not limited to the above-described embodiment. The present invention may be modified and improved in various ways as apparent to those of ordinary skill in the art.

For example, the energizing current adjustment section 23 may adjust pulse length of the energizing current instead of the pulse amplitude of the energizing current. Alternatively, the energizing current adjustment section 23 may adjust both the pulse amplitude and the pulse length of the energizing current. Further, although the LED 20 is incorporated as the light-emitting section in the above embodiment, a laser diode; or the like may be incorporated instead. Likewise, although the PD 21 is incorporated as the light-receiving section in the above embodiment, a phototransistor, or the like may be incorporated instead.

Further, although the continuous signal (continuous voltage) of the output of the sample-hold section 25 passes through the filter 22 in the above embodiment, a voltage of an input of the sample-hold section 25, or a current of an input of the I / V converting section 28 may pass through the filter 22 instead.

Likewise, although the initial adjustment value is created based on the continuous signal (continuous voltage) of the output of the sample-hold section 25 in the above embodiment, the initial adjustment value may be created based on the voltage of the input of the sample-hold section 25, or the current of the input of the I / V converting section 28 instead,

Further, although the initial adjustment value is stored in the EEPROM 240 in the above embodiment, the initial adjustment value may be stored in other nonvolatile memory. Furthermore, the initial adjustment value may be rewritten, for example, at the time of inspection or repair of the vehicle.

Such changes and modifications are to be understood as being within the scope of the present invention as defined by the appended claims.

## Claims

1. A collision detection sensor for mounting on the bumper of a vehicle comprising:
a light-emitting section (20);
a fiber optics (3) which, when arranged in said bumper, allows light emitted by the light-emitting section (20) to pass therethrough;
a light-receiving section (21) which receives the light passing through the fiber optics (3) and performs photoelectric conversion to output an electrical signal corresponding to the received light;
a filter (22) electrically connected to the light-receiving section (21) and having a time constant longer than a time constant of a collision signal to which the electrical signal is changed at the time when the fiber optics (3) is deformed as a result of collision;
an energizing current adjustment section (23) for adjusting an energizing current flowing through the light-emitting section (20) based on a component extracted by the filter (22) to remove a variation due to age deterioration of parts of the sensor or temperature change in the light-emitting section (20) from the electrical signal that is output from the light-receiving section (21); and
an initial zero-point setting section (24) electrically connected to the energizing current adjustment section (23), wherein
the initial zero-point setting section (24) has a rewritable memory (24b) for storing an initial adjustment value created based on an electrical signal that is output from the light-receiving section (21) and generated just after an installation of the light-emitting section (20), the light-receiving section (21) and the fiber optics (3), and
the energizing current adjustment section (23) adjusts the energizing current based on said initial adjustment value.

2. The sensor according to claim 1, wherein
the filter (22) has the time constant of approximately 1.6 millisecond.

3. The sensor according to claims 1 or 2, wherein
the light-emitting section (20) is a light-emitting diode, and
the light-receiving section (21) is a photo diode.

4. The sensor according to any one of claims 1 to 3, wherein
The energizing current adjustment section (23) pulse-controls the energizing current, and
The light-emitting section (20) flashes in response to pulse-control of the energizing current.

5. The sensor according to claim 4, wherein
the energizing current adjustment section (23) adjusts a pulse amplitude of the energizing current.

6. The sensor according to claim 4, wherein
the energizing current adjustment section (23) adjusts a pulse length of the energizing current.

7. The sensor according to any one of claims 4 to 6, further comprising:
a sample-hold section (25) for generating a continuous signal by complementing the electrical signal output from the light-receiving section (21) with another signal when the light-emitting section (20) is turned off.

8. The sensor according to claim 7, further comprising:
a transmitter (26) which produces a pulse signal transmitted to the energizing current adjustment section (23) and the sample-hold section (25), wherein
the pulse signal synchronizes the energizing current adjustment section (23) and the sample-hold section (25).

9. The sensor according to claim 1, wherein
the fiber optics (3) is deformed upon collision with a pedestrian.

10. A collision detection method comprising:
emitting a light based on an energizing current;
transmitting the emitted light through a fiber optics (3) provided in a bumper of a vehicle;
receiving the transmitted light;
converting the received light to an electric signal for detecting a collision based thereon;
extracting a signal component having a time constant longer than a time constant of a collision signal corresponding to a collision component included in the electric signal created when the fiber optics (3) is deformed as a result of collision;
adjusting the energizing current based on the extracted signal component to remove a variation due to age deterioration of parts of the sensor or temperature change in the light emitting section from the electrical signal; and
creating an initial adjustment value based on the electric signal converted just after initial emission of the light just after installation of the light-emitting section (20), the light-receiving section (21) and the fiber optics (3), and storing such initial adjustment value in a rewritable memory (240); and
wherein said adjusting step adjusts the energizing current based on said initial adjustment value in addition to the extracted signal component.

11. The method according to claim 10, further comprising:
the adjusting step includes a step of pulse-controlling the energizing current so that the light is emitted in response to the pulse control of the energizing current.

12. The method according to claim 11, wherein
the adjusting step adjusts a pulse amplitude of the energizing current based on the extracted signal component.

13. The method according to claim 11, wherein
the adjusting step adjusts a pulse length of the energizing current based on the extracted signal component.

14. The method according to any one of claims 11 to 13, further comprising:
sampling and holding the electrical signal in timed relation with the pulse control of the energizing current.

## Patentansprüche

1. Kollisionserfassungssensor zum Montieren an dem Stoßfänger eines Fahrzeugs, aufweisend:
einen lichtemittierenden Abschnitt (20);
einen Lichtwellenleiter (3), durch den, wenn er in dem Stoßfänger angeordnet ist, das durch den lichtemittierenden Abschnitt (20) emittierte Licht gelangen kann;
einen lichtempfangenden Abschnitt (21), der das durch den Lichtwellenleiter (3) gelangende Licht empfängt und eine photoelektrische Umwandlung ausführt, um ein dem empfangenen Licht entsprechendes elektrisches Signal auszugeben;
einen Filter (22), der mit dem lichtempfangenden Abschnitt (21) elektrisch verbunden ist und eine Zeitkonstante aufweist, die länger als eine Zeitkonstante eines Kollisionssignals ist, in das das elektrische Signal zu dem Zeitpunkt verändert wird, wenn der Lichtwellenleiter (3) infolge einer Kollision verformt wird;
einen Aktivierungsstrom-Einstellungsabschnitt (23) zum Einstellen eines Aktivierungsstroms, der durch den lichtemittierenden Abschnitt (20) fließt, basierend auf einer Komponente, die durch den Filter (22) extrahiert wird, um eine Variation aufgrund einer alterungsbedingten Verschlechterung von Teilen des Sensors oder einer Temperaturveränderung in dem lichtemittierenden Abschnitt (20) aus dem elektrischen Signal, das aus dem lichtempfangenden Abschnitt (21) ausgegeben wird, zu entfernen; und
einen Initial-Nullpunkt-Einstellungsabschnitt (24), der mit dem Aktivierungsstrom-Einstellungsabschnitt (23) elektrisch verbunden ist, wobei der Initial-Nullpunkt-Einstellungsabschnitt (24) einen überschreibbaren Speicher (24b) zum Speichern eines Initialeinstellungswerts aufweist, der basierend auf einem elektrischen Signal erzeugt wird, das aus dem lichtempfangenden Abschnitt (21) ausgegeben und kurz nach einer Installation des lichtemittierenden Abschnitts (20), des lichtempfangenden Abschnitts (21) und des Lichtwellenleiters (3) erzeugt wird, und
der Aktivierungsstrom-Einstellungsabschnitt (23) den Aktivierungsstrom basierend auf dem Initialeinstellungswert einstellt.

2. Sensor nach Anspruch 1, wobei
der Filter (22) die Zeitkonstante von näherungsweise 1,6 Millisekunden aufweist.

3. Sensor nach den Ansprüchen 1 oder 2, wobei
der lichtemittierende Abschnitt (20) eine lichtemittierende Diode ist, und
der lichtempfangende Abschnitt (21) eine Photodiode ist.

4. Sensor nach einem der Ansprüche 1 bis 3, wobei
der Aktivierungsstrom-Einstellungsabschnitt (23) eine Pulssteuerung des Aktivierungsstroms ausführt, und
der lichtemittierende Abschnitt (20) in Reaktion auf eine Pulssteuerung des Aktivierungsstroms aufleuchtet.

5. Sensor nach Anspruch 4, wobei
der Aktivierungsstrom-Einstellungsabschnitt (23) eine Pulsamplitude des Aktivierungsstroms einstellt.

6. Sensor nach Anspruch 4, wobei
der Aktivierungsstrom-Einstellungsabschnitt (23) eine Pulslänge des Aktivierungsstroms einstellt.

7. Sensor nach einem der Ansprüche 4 bis 6, ferner aufweisend:
einen Abtastwert-Halteabschnitt (25) zum Erzeugen eines kontinuierlichen Signals, indem das elektrische Signal, das aus dem lichtempfangenden Abschnitt (21) ausgegeben wird, durch ein weiteres Signal ergänzt wird, wenn der lichtemittierende Abschnitt (20) abgeschaltet wird.

8. Sensor nach Anspruch7, ferner aufweisend:
einen Sender (26), der ein Pulssignal erzeugt, das an den Aktivierungsstrom-Einstellungsabschnitt (23) und den Abtastwert-Halteabschnitt (25) übertragen wird, wobei
der Pulssignal den Aktivierungsstrom-Einstellungsabschnitt (23) und den Abtastwert-Halteabschnitt (25) synchronisiert.

9. Sensor nach Anspruch 1, wobei
der Lichtwellenleiter (3) bei einer Kollision mit einem Fußgänger verformt wird.

10. Kollisionserfassungsverfahren, beinhaltend:
Emittieren eines Lichts basierend auf einem Aktivierungsstrom;
Übertragen des emittierten Lichts durch einen Lichtwellenleiter (3), der in einem Stoßfänger eines Fahrzeugs angeordnet ist;
Empfangen des übertragenen Lichts;
Umwandeln des empfangenen Lichts in ein darauf basierendes elektrisches Signal zum Erfassen einer Kollision;
Extrahieren einer Signalkomponente mit einer Zeitkonstante, die länger als eine Zeitkonstante eines Kollisionssignals ist, das einer Signalkomponente entspricht, die in dem elektrischen Signal beinhaltet ist, das erzeugt wird, wenn der Lichtwellenleiter (3) infolge einer Kollision verformt wird;
Einstellen des Aktivierungsstroms basierend auf der extrahierten Signalkomponente, um eine Variation aufgrund einer alterungsbedingten Verschlechterung von Teilen des Sensors oder einer Temperaturveränderung in dem lichtemittierenden Abschnitt aus dem elektrischen Signal zu entfernen; und
Erzeugen eines Initialeinstellungswerts basierend auf dem elektrischen Signal, das kurz nach einer initialen Emission des Lichts kurz nach einer Installation des lichtemittierenden Abschnitts (20), des lichtempfangenden Abschnitts (21) und des Lichtwellenleiters (3) umgewandelt wird, und Speichern eines solchen Initialeinstellungswerts in einem überschreibbaren Speicher (240); und
wobei der Einstellungsschritt den Aktivierungsstrom basierend auf dem Initialeinstellungswert neben der extrahierten Signalkomponente einstellt.

11. Verfahren nach Anspruch 10, ferner beinhaltend:
den Einstellungsschritt, der einen Schritt zur Pulssteuerung des Aktivierungsstrom beinhaltet, so dass das Licht in Reaktion auf die Pulssteuerung des Aktivierungsstroms emittiert wird.

12. Verfahren nach Anspruch 11, wobei
der Einstellungsschritt eine Pulsamplitude des Aktivierungsstroms basierend auf der extrahierten Signalkomponente einstellt.

13. Verfahren nach Anspruch 11, wobei
der Einstellungsschritt eine Pulslänge des Aktivierungsstroms basierend auf der extrahierten Signalkomponente einstellt.

14. Verfahren nach einem der Ansprüche 11 bis 13, ferner beinhaltend:
Abtasten und Halten des elektrischen Signals in einer zeitlich festgelegten Beziehung zu der Pulssteuerung des Aktivierungsstroms.

## Revendications

1. Capteur de détection de collisions à monter sur le pare-chocs d'un véhicule, comprenant :
une section électroluminescente (20) ;
une fibre optique (3) qui, lorsqu'elle est agencée dans ledit pare-chocs, permet à la lumière émise par la section électroluminescente (20) de passer en travers ;
une section (21) de réception de lumière qui reçoit la lumière passant à travers la fibre optique (3) et effectue une conversion photoélectrique pour délivrer en sortie un signal électrique correspondant à la lumière reçue ;
un filtre (22) électriquement relié à la section (21) de réception de lumière et ayant une constante de temps plus longue qu'une constante de temps d'un signal de collision auquel le signal électrique est changé au moment où la fibre optique (3) est déformée à la suite d'une collision ;
une section (23) de réglage de courant d'excitation pour régler un courant d'excitation circulant à travers la section électroluminescente (20) sur la base d'une composante extraite par le filtre (22) afin de retirer une variation due à un vieillissement de parties du capteur ou à un changement de température dans la section électroluminescente (20) du signal électrique qui est délivré en sortie de la section (21) de réception de lumière ; et
une section initiale (24) de rétablissement au point zéro électriquement reliée à la section (23) de réglage de courant d'excitation ; où
la section initiale (24) de rétablissement au point zéro possède une mémoire réinscriptible (24b) pour stocker une valeur de réglage initiale créée sur la base d'un signal électrique qui est délivré en sortie de la section (21) de réception de lumière et généré juste après une installation de la section électroluminescente (20), de la section (21) de réception de lumière et de la fibre optique (3), et
la section (23) de réglage de courant d'excitation règle le courant d'excitation sur la base de ladite valeur de réglage initiale.

2. Capteur selon la revendication 1, dans lequel
le filtre (22) a une constante de temps d'approximativement 1,6 millisecondes.

3. Capteur selon la revendication 1 ou 2, dans lequel la section électroluminescente (20) est une diode électroluminescente, et
la section (21) de réception de lumière est une photodiode.

4. Capteur selon l'une quelconque des revendications 1 à 3, dans lequel
la section (23) de réglage de courant d'excitation commande par impulsion le courant d'excitation, et
la section électroluminescente (20) s'éclaire en réponse à une commande par impulsion du courant d'excitation.

5. Capteur selon la revendication 4, dans lequel
la section (23) de réglage de courant d'excitation règle une amplitude d'impulsion du courant d'excitation.

6. Capteur selon la revendication 4, dans lequel
la section (23) de réglage de courant d'excitation règle une longueur d'impulsion du courant d'excitation.

7. Capteur selon l'une quelconque des revendications 4 à 6, comprenant en plus :
une section (25) de maintien d'échantillon pour générer un signal continu en mettant en oeuvre le signal électrique délivré en sortie de la section (21) de réception de lumière avec un autre signal lorsque la section électroluminescente (20) est mise en position d'arrêt.

8. Capteur selon la revendication 7, comprenant en plus :
un transmetteur (26) qui produit un signal d'impulsion transmis à la section (23) de réglage de courant d'excitation et à la section (25) de maintien d'échantillon, où
le signal d'impulsion synchronise la section (23) de réglage de courant d'excitation et la section (25) de maintien d'échantillon.

9. Capteur selon la revendication 1, dans lequel
la fibre optique (3) est déformée à une collision avec un piéton.

10. Procédé de détection de collisions comprenant le fait de :
émettre une lumière sur la base d'un courant d'excitation ;
transmettre la lumière émise à travers une fibre optique (3) pourvue dans un pare-chocs d'un véhicule ;
recevoir la lumière transmise ;
convertir la lumière reçue en un signal électrique pour détecter une collision sur la base de celui-ci ;
extraire une composante de signal ayant une constante de temps plus longue qu'une constante de temps d'un signal de collision correspondant à une composante de collision comprise dans le signal électrique créé lorsque la fibre optique (3) est déformée à la suite d'une collision ;
régler le courant d'excitation sur la base de la composante de signal extraite pour retirer une variation due à un vieillissement de parties du capteur ou à un changement de température dans la section électroluminescente du signal électrique ; et
créer une valeur de réglage initiale sur la base du signal électrique converti juste après une émission initiale de la lumière juste après l'installation de la section électroluminescente (20), de la section (21) de réception de lumière et de la fibre optique (3), et stocker une telle valeur de réglage initiale dans une mémoire réinscriptible (240) ; et
où ladite étape de réglage règle le courant d'excitation sur la base de ladite valeur de réglage initiale en plus de la composante de signal extraite.

11. Procédé selon la revendication 10, comprenant en plus :
l'étape de réglage comporte une étape de commande par impulsion du courant d'excitation de sorte que la lumière soit émise en réponse à la commande d'impulsion du courant d'excitation.

12. Procédé selon la revendication 11, dans lequel l'étape de réglage règle une amplitude d'impulsion du courant d'excitation sur la base de la composante de signal extraite.

13. Procédé selon la revendication 11, dans lequel l'étape de réglage règle une longueur d'impulsion du courant d'excitation sur la base de la composante de signal extraite.

14. Procédé selon l'une quelconque des revendications 11 à 13, comprenant en plus le fait de :
échantillonner et maintenir le signal électrique dans une relation temporisée avec la commande d'impulsion du courant d'excitation.
